# EUROPEAN PATENT SPECIFICATION

(11) **EP 2 613 083 B1**
(45) Date of publication and mention of the grant of the patent: **12.08.2020**
(21) Application number: 12190986.5
(22) Date of filing: 01.11.2012
(51) Int. Cl.: F23R 3/04, F23R 3/28

(54) **Fuel nozzle assembly for use in a turbine engine and methods of assembling same**
Brennstoffdüsenanorndung zur Verwendung in einem Gasturbinenmotor und Montageverfahren dafür
Ensemble de buse à combustible à utiliser avec un moteur à turbine et son procédé d'assemblage

(30) Priority: 03.01.2012 US 201213342303
(43) Date of publication of application: 10.07.2013
(73) Proprietor: General Electric Company, Schenectady, NY 12345 (US)
(72) Inventor: Uhm, Jong Ho, Greenville, SC South Carolina 29615 (US); Johnson, Thomas Edward, Greenville, SC South Carolina 29615 (US)
(74) Representative: Freigutpartners IP Law Firm

(56) References cited:
- US-A1- 2010 275 601
- US-A1- 2011 083 439

## Description

### BACKGROUND OF THE INVENTION

The subject matter described herein relates generally to turbine engines and more particularly, to combustor assemblies for use in turbine engines.

At least some known gas turbine engines ignite a fuel-air mixture in a combustor assembly to generate a combustion gas stream that is channeled to a turbine via a hot gas path. Compressed air is delivered to the combustor assembly from a compressor. Known combustor assemblies include a combustor liner that defines a combustion region, and a plurality of fuel nozzle assemblies that enable fuel and air delivery to the combustion region. The turbine converts the thermal energy of the combustion gas stream to mechanical energy used to rotate a turbine shaft. The output of the turbine may be used to power a machine, for example, an electric generator or a pump.

At least some known fuel nozzle assemblies include tube assemblies or micro-mixers that enable mixing of substances, such as diluents, gases, and/or air with fuel, to generate a fuel mixture for combustion. Such fuel mixtures may include a hydrogen gas (H₂) that is mixed with fuel to create a high hydrogen fuel mixture that is channeled to the combustion region. Such a fuel nozzle assembly is known from US 2011/0083439A1. During combustion of fuel mixtures, at least some known combustors may experience flame holding or flashback in which the combustion flame travels upstream towards the fuel nozzle assembly. Such flame holding/flashback events may result in degradation of emissions performance, overheating, and/or damage to the fuel nozzle assembly.

In addition, during operation of at least some known combustor assemblies, combustion of high hydrogen fuel mixtures may create a plurality of eddies adjacent to an outer surface of the fuel nozzle assembly. Such eddies may increase the temperature within the combustion assembly and/or induce a screech tone frequency that induces vibrations throughout the combustor assembly and fuel nozzle assembly. Over time, continued operation with increased internal temperatures and/or such vibrations may cause wear and/or may shorten the useful life of the combustor assembly.

### BRIEF DESCRIPTION OF THE INVENTION

In one aspect, a fuel nozzle assembly for use with a turbine engine is provided. The fuel nozzle assembly includes a plurality of fuel nozzles positioned within an air plenum defined by a casing. Each of the plurality of fuel nozzles is coupled to a combustion liner defining a combustion chamber. Each of the plurality of fuel nozzles includes a housing that includes an inner surface that defines a cooling fluid plenum and a fuel plenum therein, and a plurality of mixing tubes extending through the housing. Each of the mixing tubes includes an inner surface defining a flow channel extending between the air plenum and the combustion chamber. At least one mixing tube of the plurality of mixing tubes includes at least one cooling fluid aperture for channeling a flow of cooling fluid from the cooling fluid plenum to the flow channel. At least one cooling conduit is coupled in flow communication with the cooling fluid plenum for channeling a flow of cooling fluid to the cooling fluid plenum.

In another aspect, a combustor assembly for use with a turbine engine is provided. The combustor assembly includes a casing that includes an air plenum, a combustor liner positioned within the casing and defining a combustion chamber therein, and a fuel nozzle assembly as described above.

In a further aspect, a method of assembling a fuel nozzle assembly for use with a turbine engine is provided. The method includes coupling a sidewall between a forward endwall and an opposite aft endwall to form a housing having an inner surface that defines a cavity therein. An interior wall is coupled to the housing inner surface such that a fuel plenum is defined between the interior wall and the forward endwall, and such that a cooling fluid plenum is defined between the interior wall and the aft endwall. A plurality of mixing tubes are coupled to the housing, such that each mixing tube of the plurality of mixing tubes extends through the housing, each of the plurality of mixing tubes including an inner surface that defines a flow channel. At least one cooling fluid aperture is defined through the at least one mixing tube to couple the cooling fluid plenum in flow communication with the mixing tube flow channel. A cooling conduit is coupled to the housing such that the cooling conduit is coupled in flow communication with the cooling fluid plenum.

### BRIEF DESCRIPTION OF THE DRAWINGS

Embodiments of the present invention will now be described, by way of example only, with reference to the accompanying drawings in which:
FIG. 1 is a schematic illustration of an exemplary turbine engine.
FIG. 2 is a sectional view of a fuel nozzle assembly which is not literally covered by the claims characterizing the invention, that may be used with the turbine engine shown in FIG. 1.
FIG. 3 is a sectional view of a portion of the fuel nozzle assembly with a simplified tube arrangement shown in FIG. 2 and taken along line 3-3.
FIG. 4 is an enlarged cross-sectional view of a portion of a fuel nozzle which is not literally covered by the claims characterizing the invention, that may be used with the fuel nozzle assembly shown in FIG. 2 and taken along area 4.
FIG. 5 is a sectional view of an embodiment of the fuel nozzle assembly shown in

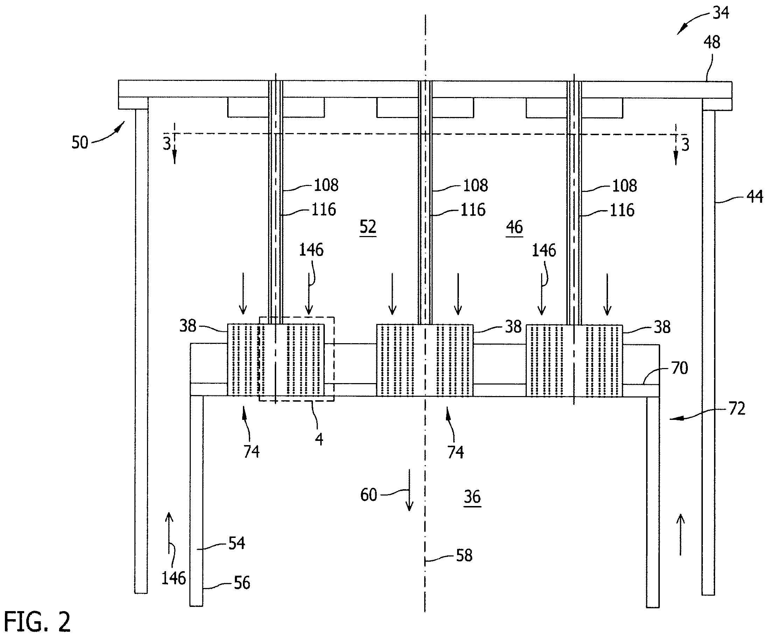

FIG. 2, wherein said embodiment corresponds to the herein claimed invention.

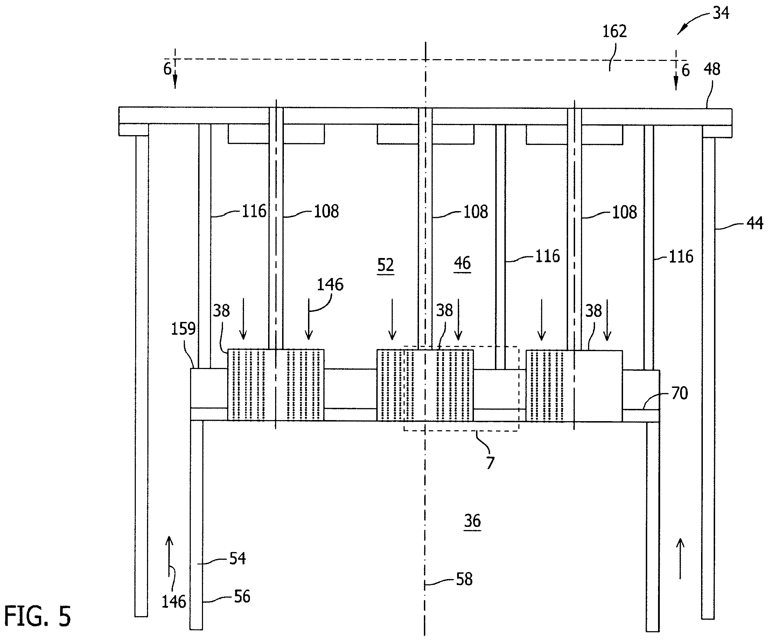

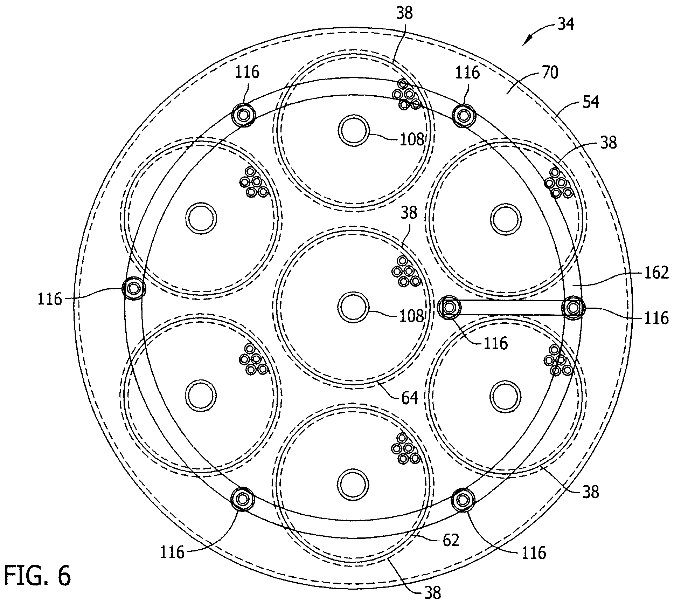

FIG. 6 is a sectional view of a portion of the fuel nozzle assembly shown in FIG. 5 and taken along line 6-6.

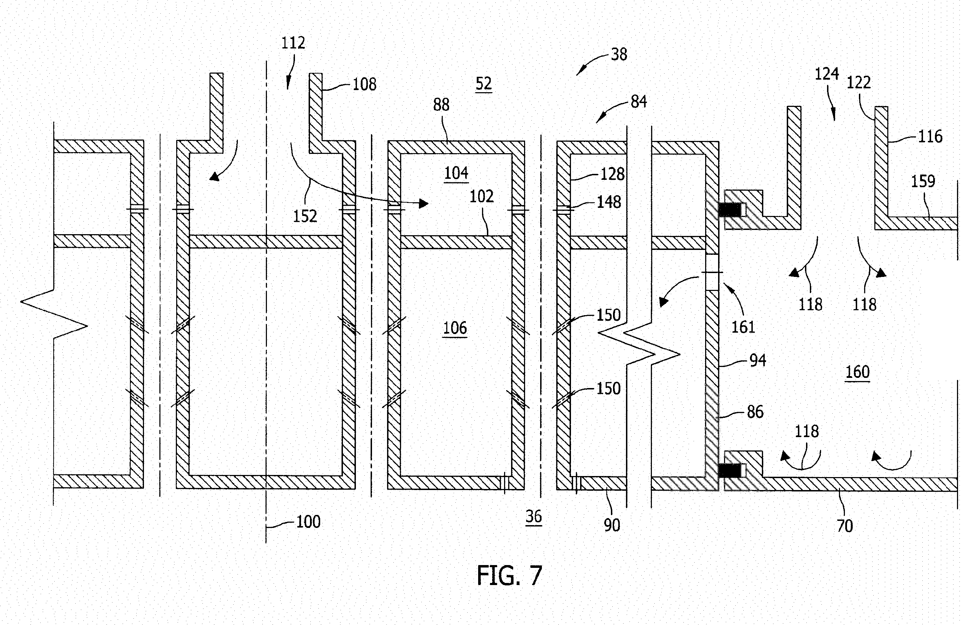

FIG. 7 is an enlarged cross-sectional view of a portion of an alternative embodiment of the fuel nozzle shown in FIG. 5 and taken along area 7.

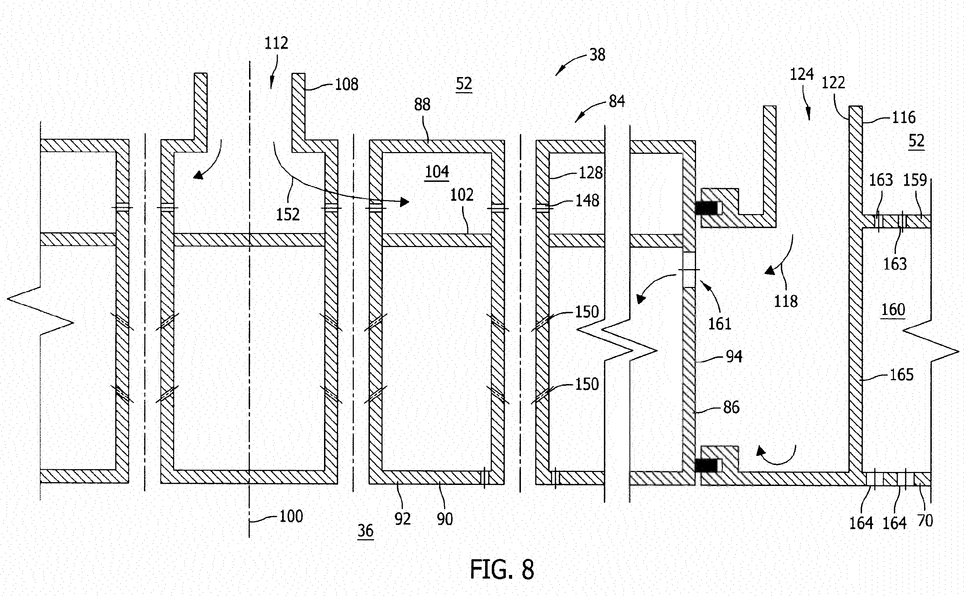

FIGS. 8-10 are enlarged cross-sectional views of alternative embodiments of the fuel nozzle that may be used with the fuel nozzle assembly shown in FIG. 5.

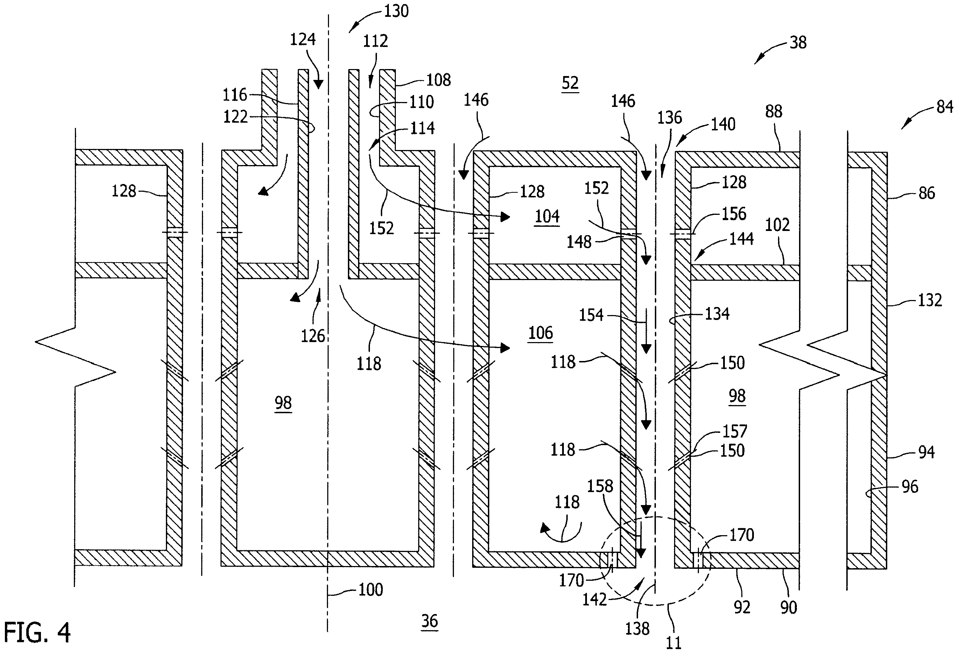

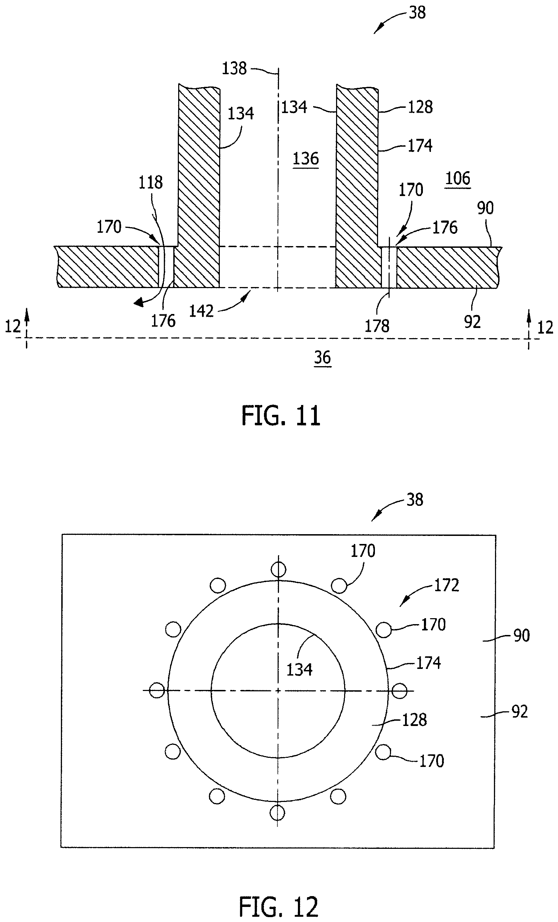

FIG. 11 is an enlarged sectional view of a portion of the fuel nozzle shown in FIG. 4 and taken along area 11.
FIG. 12 is a sectional view of a portion of the fuel nozzle shown FIG. 11 and taken along line 12-12.

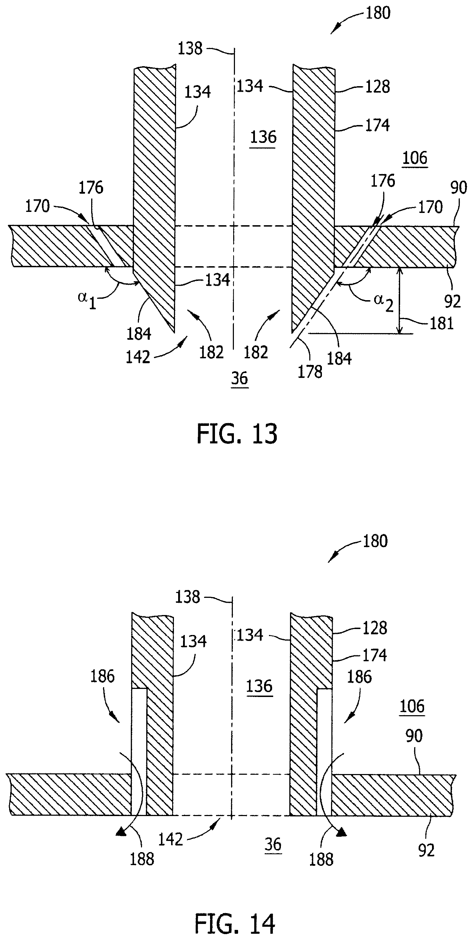

FIGS. 13-15 are enlarged sectional views of alternative embodiments of the fuel nozzle shown in FIG. 11.

### DETAILED DESCRIPTION OF THE INVENTION

The exemplary methods and systems described herein overcome at least some disadvantages of at least some known combustor assemblies by providing a fuel nozzle assembly that includes a mixing tube that is coupled to a cooling fluid plenum that enables cooling fluid to be channeled through and/or around the mixing tube into a combustion chamber to facilitate reducing flame holding/flashback events and reduce NO_{X} emissions. Moreover, the mixing tube includes a fuel aperture that enables fuel to be channeled into the mixing tube, and a cooling aperture that is downstream of the fuel aperture to enable cooling fluid to be channeled into the mixing tube such that a boundary layer is formed between the fuel mixture and the mixing tube. By channeling cooling fluid into the mixing tube downstream from the fuel mixture, the mixing tube facilitates reducing the probability of flame holding/flashback of the fuel nozzle. In addition, the fuel nozzle assembly includes a plurality of openings that are oriented about the mixing tube to enable cooling fluid to be channeled into the combustion chamber to facilitate reducing the formation of eddies that may induce screech tone frequencies within the fuel nozzle assembly. By reducing the formation of such eddies, undesired vibrations that may cause damage to the fuel nozzle assembly are facilitated to be reduced, such that the operating efficiency and useful life of the turbine engine are increased.

As used herein, the term "cooling fluid" refers to nitrogen, air, fuel, inert gases, or some combination thereof, and/or any other fluid that enables the fuel nozzle to function as described herein. As used herein, the term "upstream" refers to a forward end of a turbine engine, and the term "downstream" refers to an aft end of a turbine engine.

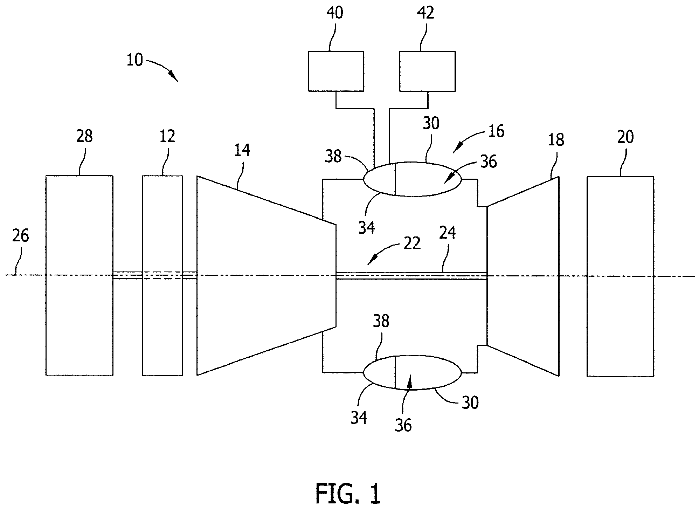

FIG. 1 is a schematic view of an exemplary turbine engine 10. Turbine engine 10 includes an intake section 12, a compressor section 14 that is downstream from intake section 12, a combustor section 16 downstream from compressor section 14, a turbine section 18 downstream from combustor section 16, and an exhaust section 20 downstream from turbine section 18. Turbine section 18 is coupled to compressor section 14 via a rotor assembly 22 that includes a shaft 24 that extends along a centerline axis 26. Moreover, turbine section 18 is rotatably coupled to compressor section 14 and to a load 28 such as, but not limited to, an electrical generator and/or a mechanical drive application. In the exemplary embodiment, combustor section 16 includes a plurality of combustor assemblies 30 that are each coupled in flow communication with compressor section 14. Each combustor assembly 30 includes a fuel nozzle assembly 34 that is coupled to a combustion chamber 36. In the exemplary embodiment, each fuel nozzle assembly 34 includes a plurality of fuel nozzles 38 that are coupled to combustion chamber 36 for delivering a fuel-air mixture to combustion chamber 36. A fuel supply system 40 is coupled to each fuel nozzle assembly 34 for channeling a flow of fuel to fuel nozzle assembly 34. In addition, a cooling fluid system 42 is coupled to each fuel nozzle assembly 34 for channeling a flow of cooling fluid to each fuel nozzle assembly 34.

During operation, air flows through compressor section 14 and compressed air is discharged into combustor section 16. Combustor assembly 30 injects fuel, for example, natural gas and/or fuel oil, into the air flow, ignites the fuel-air mixture to expand the fuel-air mixture through combustion, and generates high temperature combustion gases. Combustion gases are discharged from combustor assembly 30 towards turbine section 18 wherein thermal energy in the gases is converted to mechanical rotational energy. Combustion gases impart rotational energy to turbine section 18 and to rotor assembly 22, which subsequently provides rotational power to compressor section 14.

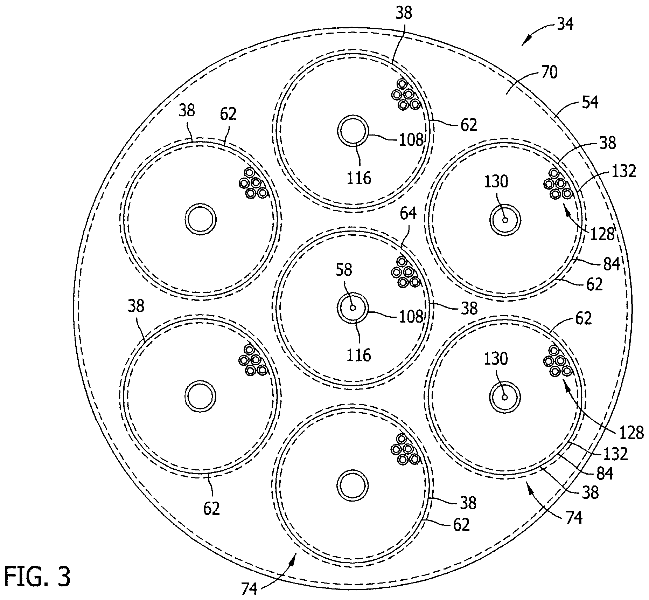

FIG. 2 is a sectional view of a fuel nozzle assembly 34 not literally according to the herein claimed invention. FIG. 3 is a sectional view of a portion of fuel nozzle assembly 34 with simplified tube arrangement taken along line 3-3 in FIG. 2. FIG. 4 is an enlarged cross-sectional view of a portion of fuel nozzle 38 taken along area 4 in FIG. 2. In the embodiment, not literally corresponding to the herein claimed invention, combustor assembly 30 includes a casing 44 that defines a chamber 46 therein. An end cover 48 is coupled to an outer portion 50 of casing 44 such that an air plenum 52 is defined within chamber 46. Compressor section 14 (shown in FIG. 1) is coupled in flow communication with chamber 46 to channel compressed air downstream from compressor section 14 to air plenum 52.

In the embodiment, not literally corresponding to the herein claimed invention, each combustor assembly 30 includes a combustor liner 54 that is positioned within chamber 46 and that is coupled in flow communication with turbine section 18 (shown in FIG. 1) through a transition piece (not shown) and with compressor section 14. Combustor liner 54 includes a substantially cylindrically-shaped inner surface 56 that defines a combustion chamber 36 that extends axially along a centerline axis 58. Combustor liner 54 is coupled to fuel nozzle assembly 34 to enable fuel to be channeled into combustion chamber 36. Combustion chamber 36 defines a combustion gas flow path 60 that extends from fuel nozzle assembly 34 to turbine section 18. In the embodiment, not literally corresponding to the herein claimed invention, fuel nozzle assembly 34 receives a flow of air from air plenum 52, receives a flow of fuel from fuel supply system 40, and channels a mixture of fuel/air into combustion chamber 36 to generate combustion gases.

Fuel nozzle assembly 34 includes a plurality of fuel nozzles 38 that are at least partially positioned within air plenum 52 and that are coupled to combustor liner 54. In the embodiment, not literally corresponding to the herein claimed invention, fuel nozzle assembly 34 includes a plurality of outer nozzles 62 that are circumferentially-spaced about a center nozzle 64. Center nozzle 64 is oriented along centerline axis 58.

In the embodiment, not literally corresponding to the herein claimed invention, an end plate 70 is coupled to an outer portion 72 of combustor liner 54 such that combustion chamber 36 is defined between end plate 70 and combustor liner 54. End plate 70 includes a plurality of openings 74 that extends through end plate 70 and that are each sized and shaped to receive a fuel nozzle 38 therethrough. Each fuel nozzle 38 is positioned within a corresponding opening 74 such that nozzle 38 is coupled in flow communication with combustion chamber 36. In an alternative embodiment, fuel nozzle assembly 34 does not include end plate 70, and fuel nozzle 34 is coupled to an adjacent fuel nozzle 34.

In the embodiment, not literally corresponding to the herein claimed invention, each fuel nozzle 38 includes a housing 84 that includes a sidewall 86 that extends between a forward endwall 88 and an opposite aft endwall 90. Aft endwall 90 is between forward endwall 88 and combustion chamber 36, and includes an outer surface 92 that at least partially defines combustion chamber 36. Sidewall 86 includes a radially outer surface 94 and a radially inner surface 96. Radially inner surface 96 defines a substantially cylindrical cavity 98 that extends between forward endwall 88 and aft endwall 90, along a longitudinal axis 100.

An interior wall 102 is positioned within cavity 98 and extends inward from inner surface 96 such that a fuel plenum 104 is defined between interior wall 102 and forward endwall 88, and such that a cooling fluid plenum 106 is defined between interior wall 102 and aft endwall 90. In the non- embodiment, not literally corresponding to the herein claimed invention, interior wall 102 is oriented such that cooling fluid plenum 106 is downstream from fuel plenum 104 along longitudinal axis 100. Alternatively, interior wall 102 may be oriented such that cooling fluid plenum 106 is upstream of fuel plenum 104.

In the embodiment, not literally corresponding to the herein claimed invention, a fuel conduit 108 is coupled in flow communication with fuel plenum 104 for channeling fuel from fuel supply system 40 to fuel plenum 104. Fuel conduit 108 extends between end cover 48 and housing 84 and includes an inner surface 110 that defines a fuel channel 112 that is coupled to fuel plenum 104. Moreover, fuel conduit 108 is coupled to forward endwall 88 and is oriented with respect to an opening 114 that extends through forward endwall 88 to couple fuel channel 112 to fuel plenum 104. A plurality of cooling conduits 116 extends between cooling fluid system 42 (shown in FIG. 1) and fuel nozzle assembly 34 for channeling cooling fluid to fuel nozzle assembly 34. In the embodiment, not literally corresponding to the herein claimed invention, each cooling conduit 116 is coupled to a corresponding fuel nozzle 38 for channeling a flow of cooling fluid 118 to cooling fluid plenum 106. Moreover, each cooling conduit 116 includes an inner surface 122 that defines a cooling channel 124, and each is coupled to interior wall 102 such that cooling channel 124 is in flow communication with cooling fluid plenum 106. In the embodiment not literally corresponding to the herein claimed invention, cooling conduit 116 is within fuel conduit 108 and extends through fuel plenum 104 to interior wall 102. Cooling conduit 116 is oriented with respect to an opening 126 extending through interior wall 102 such that cooling channel 124 is coupled in flow communication with cooling fluid plenum 106. Moreover, cooling conduit 116 is configured to inject cooling fluid 118 into mixing tubes 128 to facilitate improving flame holding/flashback margin and NOx performance. In addition, cooling conduit 116 channels at least a portion of cooling fluid 118 towards aft endwall 90, and discharges cooling fluid 118 around an outlet of mixing tubes 128 to facilitate convective cooling of aft endwall 90.

In the embodiment, not literally corresponding to the herein claimed invention, fuel nozzle 38 includes a plurality of mixing tubes 128 that each extend through housing 84. Mixing tubes 128 are oriented in a plurality of rows that extend outwardly from a center portion 130 of fuel nozzle assembly 34 towards an outer surface 132 of housing 84, and are spaced circumferentially about nozzle center portion 130. Each mixing tube 128 includes a substantially cylindrical inner surface 134 that defines a flow channel 136 that extends between forward endwall 88 and aft endwall 90 and along a centerline axis 138. More specifically, inner surface 134 extends between an inlet opening 140 extending through forward endwall 88, and an outlet opening 142 extending through aft endwall 90, to couple air plenum 52 to combustion chamber 36. In addition, each mixing tube 128 extends through a plurality of openings 144 defined in interior wall 102. Flow channel 136 is sized and shaped to enable air 146 to be channeled from air plenum 52 into combustion chamber 36. In the embodiment, not literally corresponding to the herein claimed invention, each mixing tube 128 is substantially parallel to longitudinal axis 100. Alternatively, at least one mixing tube 128 may be oriented obliquely with respect to longitudinal axis 100.

In the embodiment, not literally corresponding to the herein claimed invention, at least one mixing tube 128 includes at least one fuel aperture 148, and at least one cooling fluid aperture 150 defined therein. Fuel aperture 148 extends through mixing tube inner surface 134 to couple fuel plenum 104 to flow channel 136. Fuel aperture 148 is configured to enable fuel 152 to be channeled from fuel plenum 104 to flow channel 136 to facilitate mixing fuel 152 with air 146 to form a fuel-air mixture 154 that is channeled to combustion chamber 36. In the embodiment, not literally corresponding to the herein claimed invention, fuel aperture 148 extends along a centerline axis 156 that is oriented substantially perpendicular to flow channel axis 138. Alternatively, fuel aperture 148 may be oriented obliquely with respect to flow channel axis 138.

Cooling fluid aperture 150 extends through mixing tube inner surface 134 to couple cooling fluid plenum 106 to flow channel 136. In the embodiment, not literally corresponding to the herein claimed invention, cooling fluid aperture 150 extends along a centerline axis 157 that is oriented obliquely with respect to flow channel axis 138. Cooling fluid aperture 150 is sized and shaped to discharge cooling fluid 118 into flow channel 136 to facilitate forming a boundary layer 158 between mixing tube inner surface 134 and fuel-air mixture 154, and to facilitate reducing flame holding/flashback events within mixing tube 128. In the embodiment, not literally corresponding to the herein claimed invention, cooling fluid aperture 150 is oriented with respect to flow channel axis 158 such that cooling fluid 118 is discharged obliquely towards outlet opening 142. Alternatively, cooling fluid aperture 150 may be oriented substantially perpendicularly with respect to flow channel axis 158. In another embodiment, cooling fluid aperture 150 may be oriented to discharge cooling fluid 118 towards inlet opening 140.

FIG. 5 is a sectional view of an inventive embodiment of fuel nozzle assembly 34 according to the invention as herein claimed. FIG. 6 is a sectional view of a portion of fuel nozzle assembly 34 and taken along line 6-6. FIG. 7 is an enlarged cross-sectional view of a portion of fuel nozzle 38 and taken along area 7 shown in FIG. 5. Identical components shown in FIGS. 5-7 are labeled with the same reference numbers used in FIGS. 2-4. In an alternative embodiment, an impingement plate 159 is coupled to end plate 70 and is spaced a distance outwardly from end plate 70 such that a chamber 160 is defined between end plate 70 and impingement plate 159. Sidewall outer surface 94 is coupled to end plate 70 and impingement plate 159 such that chamber 160 is defined between outer surface 94, impingement plate 159, and end plate 70. Sidewall 86 includes at least one opening 161 that extends through sidewall outer surface 94 to coupled cooling fluid plenum 106 with chamber 160. Cooling conduit 116 is coupled to sidewall outer surface 94 and oriented with respect to opening 161 to couple cooling channel 124 in flow communication with cooling fluid plenum 106. More specifically, cooling conduit 116 is coupled to impingement plate 159 such that cooling channel 124 is in flow communication with chamber 160. Opening 161 is sized and shaped to enable cooling fluid to be channeled from cooling channel 124 to cooling fluid plenum 106. In addition, cooling conduit 116 is oriented to channel cooling fluid 118 towards end plate 70 to facilitate convective cooling of end plate 70.

In addition, each cooling conduit 116 is coupled to a cooling manifold 162 that includes a plurality of valves (not shown) that correspond to each cooling conduit 116 to enable cooling fluid to be selectively channeled to each cooling conduit 116.

FIGS. 8-10 are enlarged cross-sectional views of alternative embodiments of fuel nozzle 38. Identical components shown in FIGS. 8-10 are labeled with the same reference numbers used in FIG. 7. Referring to FIG. 8, in another embodiment, impingement plate 159 includes a plurality of impingement openings 163 that are each sized and shaped to enable air from air plenum 52 to be channeled into chamber 160 to facilitate impingement cooling of end plate 70. In addition, end plate 70 includes a plurality of effusion openings 164 that extend through end plate 70 and are each sized and shaped to enable air to be channeled from chamber 160 into combustion chamber 36 to facilitate cooling of end plate 70. A separation wall 165 extends between cooling conduit 116 and end plate 70 to isolate cooling channel 124 from chamber 160. Separation wall 165 is sized and shaped to channel cooling fluid 118 from cooling channel 124 to cooling fluid plenum 106 through opening 161.

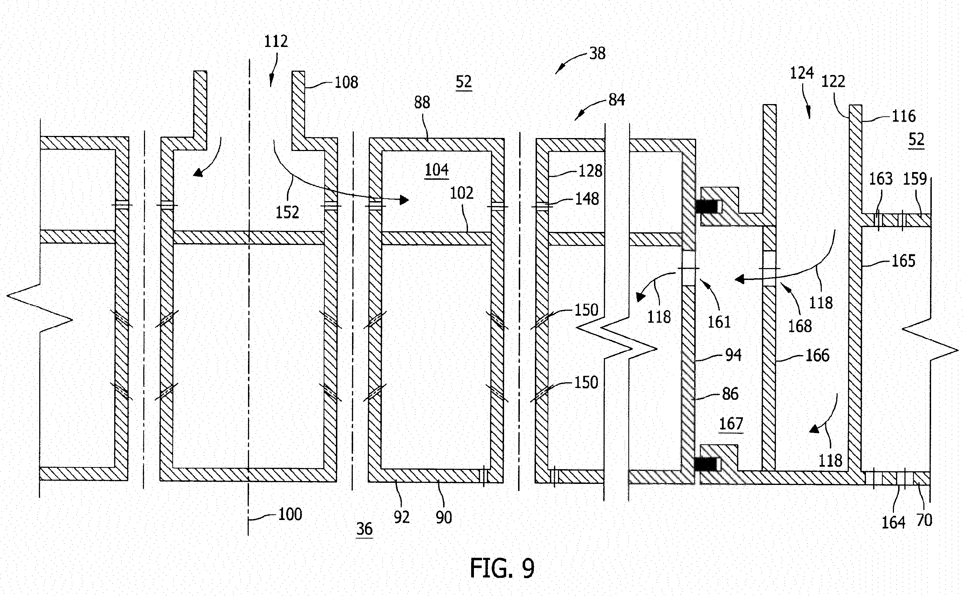

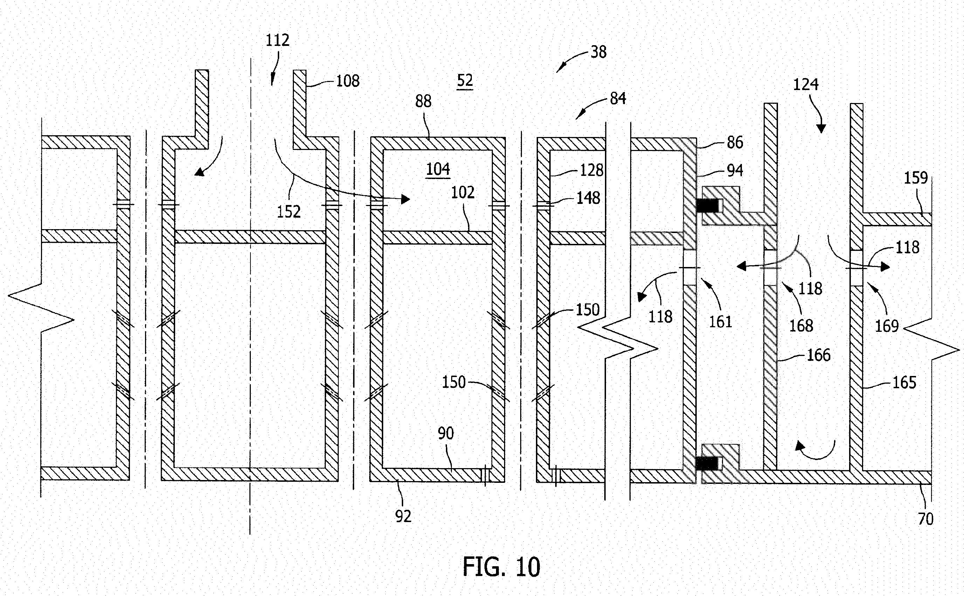

Referring to FIGS. 9 and 10, in an alternative embodiment, a divider wall 166 is coupled to cooling conduit 116 such that divider wall 166 at least partially defines cooling channel 124. Divider wall 166 is positioned between cooling conduit 116 and housing 84 such that a chamber 167 is defined between divider wall 166 and sidewall outer surface 94. Divider wall 166 includes at least one opening 168 that extends through divider wall 166 to couple cooling channel 124 in flow communication with chamber 167 such that cooling fluid 118 is channeled from cooling channel 124, through chamber 167, and to cooling fluid plenum 106. In addition, in one embodiment, separation wall 165 includes at least one opening 169 to coupled cooling channel 124 in flow communication with chamber 160. In such an embodiment, impingement plate 159 and end plate 70 may not include openings 163 and 164, respectively.

FIG. 11 is an enlarged sectional view of a portion of fuel nozzle 38 and taken along area 11 shown in FIG. 4. FIG. 12 is a sectional view of a portion of fuel nozzle 38 taken along line 12-12 and shown FIG. 11. Identical components shown in FIGS. 11 and 12 are labeled with the same reference numbers used in FIGS. 2-4. In the exemplary embodiment, aft endwall 90 includes a plurality of cooling openings 170 that extend through aft endwall 90 to enable cooling fluid 118 to be channeled from cooling fluid plenum 106 into combustion chamber 36. Cooling openings 170 are spaced circumferentially about mixing tube 128. More specifically, fuel nozzle assembly 34 includes at least one set 172 of cooling openings 170 that are spaced circumferentially about an outer surface 174 of at least one mixing tube 128. In one embodiment, fuel nozzle assembly 34 includes a plurality of sets 172 of cooling opening 170 that are each oriented with respect to a corresponding mixing tube 128. Each cooling opening 170 is sized and shaped to discharge cooling fluid 118 towards combustion chamber 36 to enable combustion flow dynamics downstream of endwall outer surface 92 to be adjusted such that secondary mixing of fuel and air through opening 170 and outlet opening 142 occurs to facilitate improving fuel and air mixing, and to facilitate reducing an amplitude of screech tone frequency noise generated during operation of combustor assembly 30.

In the exemplary embodiment, each cooling opening 170 includes an inner surface 176 that extends along a centerline axis 178 that is oriented substantially parallel to mixing tube axis 138. Alternatively, each cooling opening 170 may be oriented obliquely with respect to mixing tube axis 138. In one embodiment, each cooling opening 170 is oriented such that cooling fluid 118 is discharged towards mixing tube flow channel 136. In another embodiment, each cooling opening 170 is oriented such that cooling fluid 118 is discharged away from mixing tube 128.

FIGS. 13-15 are enlarged sectional views of an alternative fuel nozzle 180. Identical components shown in FIGS. 13-15 are labeled with the same reference numbers used in FIG. 11. Referring to FIG. 13, in an alternative embodiment, mixing tube 128 includes an inner surface 134 that extends a distance 181 outwardly from aft endwall outer surface 92, and towards combustion chamber 36. Mixing tube 128 also includes a tip end 182 that includes a tip surface 184 that extends between inner surface 134 and outer surface 174. In the exemplary embodiment, tip surface 184 is oriented at a first oblique angle α₁ with respect to aft endwall outer surface 92. Each cooling opening 170 is oriented at a second oblique angle α₂ that is approximately equal to first oblique angle α₁ such that each cooling channel discharges cooling fluid along tip surface 184, and towards flow channel 136.

Referring to FIG. 14, in another embodiment, mixing tube 128 includes at least one slot 186 that is defined along mixing tube outer surface 174 to couple cooling fluid plenum 106 in flow communication with combustion chamber 36. Slot 186 is sized and shaped to discharge cooling fluid 118 from cooling fluid plenum 106 to combustion chamber 36 to facilitate forming a jet layer 188 around mixing tube outer surface 174, and across aft endwall 90 to adjust combustion flow dynamics downstream of endwall outer surface 92 such that secondary mixing of fuel and air through slot 186 and outlet opening 142 occurs to facilitate improving fuel and air mixing, and to reduce an amplitude of screech tone frequency noise generated during operation of combustor assembly 30. In one embodiment, slot 186 is oriented substantially parallel to flow channel 136. Alternatively, slot 186 may be oriented obliquely with respect to flow channel 136 such that slot 186 extends from outer surface 174 towards inner surface 134. In addition, in one embodiment, mixing tube 128 includes a plurality of slots 186 oriented circumferentially about outer surface 174. In another embodiment, mixing tube 128 extends outwardly from endwall outer surface 92 as shown in FIG. 13.

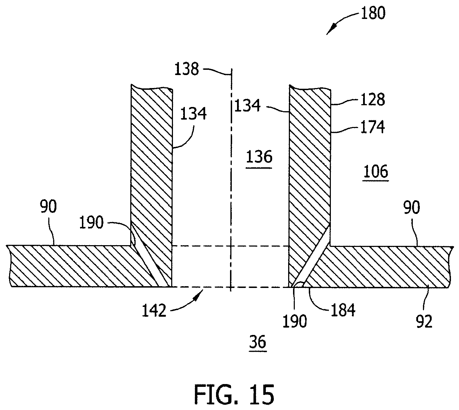

Referring to FIG. 15, in one embodiment, mixing tube 128 includes at least one channel 190 extending from outer surface 174 towards mixing tube inner surface 122. Channel 190 extends through tip surface 184 to couple cooling fluid plenum 106 in flow communication with combustion chamber 36. Channel 190 is sized and shaped to enable cooling fluid to be channeled from cooling fluid 118 from cooling fluid plenum 106 to combustion chamber 36 to facilitate secondary mixing of fuel and air through channel 190 and outlet opening 142.

The size, shape, and orientation of cooling fluid aperture 150 are selected to facilitate channeling cooling fluid into mixing tube 128 to facilitate reducing a flame holding/flashback event and to facilitate mixing fuel/air mixture with cooling fluid. In addition, the size, shape, and orientation of cooling openings 170, slot 186, and channel 190 are selected to facilitate forming a jet layer across aft endwall 90 and within combustion chamber 36 to adjust combustion flow dynamics and to facilitate reducing the amplitude of screech tone frequencies that cause undesired vibrations within fuel nozzle assembly 34.

The above-described apparatus and methods overcome at least some disadvantages of known combustor assemblies by providing a fuel nozzle assembly that includes a mixing tube that is coupled to a cooling fluid plenum such that cooling fluid may be channeled into the mixing tube to facilitate forming a boundary layer between a fuel/air mixture and the mixing tube to reduce undesirable flame holding/flashback events. Moreover, the mixing tube includes a fuel aperture that enables fuel to be channeled into the mixing tube, and a cooling aperture that is downstream of the fuel aperture to enable cooling fluid to be channeled into the mixing tube such that a boundary layer is formed between the fuel mixture and the mixing tube. By channeling cooling fluid into the mixing tube downstream from the fuel mixture, the mixing tube facilitates reducing the operating temperature of the fuel nozzle. In addition, the fuel nozzle assembly includes a plurality of openings that are oriented about the mixing tube to enable cooling fluid to be channeled into the combustion chamber to generate secondary mixing of the fuel/air mixture with cooling fluid to reduce NOx formation, and to facilitate reducing the formation of eddies that may induce screech tone frequencies within the fuel nozzle assembly. By reducing the formation of such eddies, undesired vibrations that may cause damage to the fuel nozzle assembly are facilitated to be reduced, such that the operating efficiency and useful life of the turbine engine are increased.

Exemplary embodiments of a combustor assembly for use in a turbine engine and methods for assembling the same are described above in detail. The methods and apparatus are not limited to the specific embodiments described herein, but rather, components of systems and/or steps of the method may be utilized independently and separately from other components and/or steps described herein. For example, the methods and apparatus may also be used in combination with other combustion systems and methods, and are not limited to practice with only the turbine engine assembly as described herein. Rather, the exemplary embodiment can be implemented and utilized in connection with many other combustion system applications.

## Claims

1. A fuel nozzle assembly (34) for use with a turbine engine (10), said fuel nozzle assembly comprising:
a plurality of fuel nozzles (38) positioned within an air plenum defined by a casing (44), each of said plurality of fuel nozzles coupled to a combustion liner (54) defining a combustion chamber, each of said plurality of fuel nozzles comprises:
a housing (84) comprising a sidewall (86) extending between a forward endwall (88) and an opposite aft endwall (90), said sidewall (86) comprising an inner surface (96) that defines a cooling fluid plenum (106) and a fuel plenum (104), wherein a fluid conduit (108) is coupled in flow communication with said fuel plenum (104), therein, said sidewall (86) comprising at least one opening (161) extending through said inner surface (96) of said sidewall (86); and
a plurality of mixing tubes (128) extending through said housing, wherein each of said mixing tubes comprises an inner surface (134) defining a flow channel (136) extending between the air plenum and the combustion chamber, at least one mixing tube of said plurality of mixing tubes comprises at least one cooling fluid aperture (150) for channeling a flow of cooling fluid from said cooling fluid plenum to said flow channel; and
at least one cooling conduit (116) coupled to said sidewall (86) such that said at least one sidewall opening (161) couples said cooling conduit (116) in flow communication with said cooling fluid plenum for channeling a flow of cooling fluid to said cooling fluid plenum.

2. A fuel nozzle assembly (34) in accordance with Claim 1, wherein said at least one mixing tube (128) comprises at least one fuel aperture (148) for channeling a flow of fuel from said fuel plenum (104) to said flow channel (136).

3. A fuel nozzle assembly (34) in accordance with Claim 1 or 2, wherein said housing (84) further comprises:
an interior wall (102) extending inwardly from said sidewall inner surface such that said fuel plenum (104) is defined between said interior wall and said forward endwall, and such that said cooling fluid plenum (106) is defined between said interior wall and said aft endwall.

4. A fuel nozzle assembly (34) in accordance with Claim 3, wherein said interior wall (102) comprises an opening (126) extending through said interior wall, said cooling conduit (116) coupled to said interior wall such that said interior wall opening couples said cooling conduit in flow communication with said cooling fluid plenum (106).

5. A fuel nozzle assembly (34) in accordance with Claim 1, further comprising:
an end plate (70) coupled to an outer surface (94) of said sidewall (86); and
an impingement plate (159) coupled to said sidewall outer surface and spaced outwardly from said end plate such that a first chamber is defined between said endplate and said impingement plate, said cooling conduit (116) coupled to said impingement plate to channel a flow of cooling fluid to said first chamber and to said cooling fluid plenum (106).

6. A fuel nozzle assembly (34) in accordance with Claim 5, further comprising a separation wall (165) coupled between said cooling conduit (116) and said end plate (70) to isolate said cooling conduit from said first chamber.

7. A fuel nozzle assembly (34) in accordance with Claim 6, wherein said separation wall (165) comprises at least one opening (169) extending through said separation wall to couple said cooling conduit (116) in flow communication with said plurality of fuel nozzles (38).

8. A fuel nozzle assembly in accordance with Claim 6 or 7, further comprising a divider wall (162) coupled between said cooling conduit (116) and said housing sidewall (86) such that a second chamber (167) is defined between said sidewall (86) and said divider wall (162), said divider wall (162) comprising at least one opening (168) extending through said divider wall (162) to couple said cooling conduit (116) in flow communication with said cooling fluid plenum (104) through said chamber (167).

9. A fuel nozzle assembly in accordance with any of Claims 3 to 7, further comprising a plurality of openings (170) extending through said aft endwall (90) to couple said cooling fluid plenum (104) to said combustion chamber, said plurality of openings (170) oriented circumferentially about said at least one mixing tube (128).

10. A fuel nozzle assembly in accordance with Claim 9, wherein said at least one mixing tube (128) comprising a tip end (182) that extends outwardly from said aft endwall (90) towards said combustion chamber.

11. A fuel nozzle assembly in accordance with Claim 10, wherein each of said plurality of openings (170) is oriented at a first oblique angle with respect to said aft endwall (90), said mixing tube tip end comprises (182) a tip surface (184) that is oriented at a second oblique angle that is approximately equal to said first oblique angle.

12. A fuel nozzle assembly in accordance with any of Claims 1 to 11, wherein said at least one mixing tube (128) comprises an outer surface (180) and at least one slot (186) defined along said outer surface (180) to couple said cooling fluid plenum (104) in flow communication with said combustion chamber.

13. A fuel nozzle assembly in accordance with any of Claims 1 to 11, wherein said at least one mixing tube (128) comprises a tip end (182) extending between an inner surface (176) and an outer surface (180), and at least one channel (190) extending from said outer surface (180) towards said tip end (182) to channel cooling fluid from said cooling fluid plenum (104) towards the combustion chamber.

14. A combustor assembly (30) for use with a turbine engine (30), said combustor assembly comprising:
a casing (44) comprising an air plenum;
a combustor liner (54) positioned within said casing and defining a combustion chamber therein; and
a fuel nozzle assembly (34) as recited in any of claims 1 to 13.

15. A method of assembling a fuel nozzle assembly (34) according to any of claims 1 to 13, use with a turbine engine (10), said method comprising:
coupling a sidewall (86) between a forward endwall (88) and an opposite aft endwall (90) to form a housing (84) having an inner surface (96) that defines a cavity (98) therein, wherein the housing sidewall (86) comprises at least one opening (161) extending through the sidewall inner surface (96);
coupling an interior wall (102) to the housing inner surface (96) such that a fuel plenum (104) is defined between the interior wall (102) and the forward endwall (88), and such that a cooling fluid plenum (106) is defined between the interior wall (102) and the aft endwall (90);
coupling a plurality of mixing tubes (128) to the housing (84), such that each mixing tube (128) of the plurality of mixing tubes extends through the housing (84), each of the plurality of mixing tubes (128) including an inner surface (134) that defines a flow channel (136);
defining at least one cooling fluid aperture (150) through the at least one mixing tube (128) to couple the cooling fluid plenum (106) in flow communication with the mixing tube flow channel (136); and
coupling a cooling conduit (116) to the housing sidewall (86) such that the at least one sidewall opening (161) couples the cooling conduit (116) in flow communication with the cooling fluid plenum (106).

16. A method in accordance with Claim 15, further comprising defining a plurality of openings (170) through the aft endwall (90) to couple the cooling fluid plenum (106) in flow communication with the combustion chamber, wherein the plurality of openings (170) are oriented circumferentially about the at least one mixing tube (128).

17. A method in accordance with Claim 15 or 16, further comprising defining at least one slot (186) along an outer surface (180) of the at least one mixing tube (128) to couple the cooling fluid plenum (106) in flow communication with the combustion chamber.

18. A method in accordance with any of Claims 15 to 17, wherein at least one mixing tube (128) of the plurality of mixing tubes includes a tip end (182) extending between the inner surface (176) and an outer surface (180) of said at least one mixing tube (128), said method further comprises defining at least one channel (190) extending from the mixing tube outer surface (180) towards the tip end (182) to channel cooling fluid from the cooling fluid plenum (106) towards the combustion chamber.

## Patentansprüche

1. Brennstoffdüsenanordnung (34) zur Verwendung mit einem Turbinenmotor (10), wobei die Brennstoffdüsenanordnung umfasst:
eine Vielzahl von Brennstoffdüsen (38), die innerhalb eines Luftsammelraums, der durch eine Ummantelung (44) definiert ist, angeordnet sind, wobei jede der Vielzahl von Brennstoffdüsen mit einer Brennkammerauskleidung (54), die eine Brennkammer definiert, gekoppelt ist, wobei jede der Vielzahl von Brennstoffdüsen umfasst:
ein Gehäuse (84), umfassend eine Seitenwand (86), die sich zwischen einer vorderen Stirnwand (88) und einer gegenüberliegenden hinteren Stirnwand (90) erstreckt, wobei die Seitenwand (86) eine Innenoberfläche (96) umfasst, die einen Kühlfluidsammelraum (106) und einen Brennstoffsammelraum (104) definiert, wobei eine Fluidleitung (108) in Strömungsverbindung mit dem Brennstoffsammelraum (104) darin gekoppelt ist, wobei die Seitenwand (86) mindestens eine Öffnung (161) umfasst, die sich durch die Innenoberfläche (96) der Seitenwand (86) erstreckt; und
eine Vielzahl von Mischrohren (128), die sich durch das Gehäuse erstrecken, wobei jedes der Mischrohre eine Innenoberfläche (134) umfasst, die einen Strömungskanal (136) definiert, der sich zwischen dem Luftsammelraum und der Brennkammer erstreckt, wobei mindestens ein Mischrohr der Vielzahl von Mischrohren mindestens einen Kühlfluiddurchgang (150) umfasst, um einen Strom von Kühlfluid von dem Kühlfluidsammelraum zu dem Strömungskanal zu leiten; und
mindestens eine Kühlleitung (116), die mit der Seitenwand (86) so gekoppelt ist, dass die mindestens eine Seitenwandöffnung (161) die Kühlleitung (116) in Strömungsverbindung mit dem Kühlfluidsammelraum koppelt, um einen Strom von Kühlfluid zu dem Kühlfluidsammelraum zu leiten.

2. Brennstoffdüsenanordnung (34) gemäß Anspruch 1, wobei das mindestens eine Mischrohr (128) mindestens einen Brennstoffdurchgang (148) zum Leiten eines Brennstoffstroms von dem Brennstoffsammelraum (104) zu dem Strömungskanal (136) umfasst.

3. Brennstoffdüsenanordnung (34) gemäß Anspruch 1 oder 2, wobei das Gehäuse (84) ferner umfasst:
eine Innenwand (102), die sich von der Innenoberfläche der Seitenwand nach innen erstreckt, sodass der Brennstoffsammelraum (104) zwischen der Innenwand und der vorderen Stirnwand definiert wird, und sodass der Kühlfluidsammelraum (106) zwischen der Innenwand und der hinteren Stirnwand definiert wird.

4. Brennstoffdüsenanordnung (34) gemäß Anspruch 3, wobei die Innenwand (102) eine Öffnung (126) umfasst, die sich durch die Innenwand erstreckt, wobei die Kühlleitung (116) mit der Innenwand so gekoppelt ist, dass die Innenwandöffnung die Kühlleitung in Strömungsverbindung mit dem Kühlfluidsammelraum (106) koppelt.

5. Brennstoffdüsenanordnung (34) gemäß Anspruch 1, ferner umfassend:
eine Endplatte (70), die mit einer Außenoberfläche (94) der Seitenwand (86) gekoppelt ist; und
eine Prallplatte (159), die mit der Außenoberfläche der Seitenwand gekoppelt ist und nach außen von der Endplatte so beabstandet ist, dass eine erste Kammer zwischen der Endplatte und der Prallplatte definiert wird, wobei die Kühlleitung (116) mit der Prallplatte gekoppelt ist, um einen Strom von Kühlfluid zu der ersten Kammer und zu dem Kühlfluidsammelraum (106) zu leiten.

6. Brennstoffdüsenanordnung (34) gemäß Anspruch 5, ferner umfassend eine Trennwand (165), die zwischen der Kühlleitung (116) und der Endplatte (70) gekoppelt ist, um die Kühlleitung von der ersten Kammer zu isolieren.

7. Brennstoffdüsenanordnung (34) gemäß Anspruch 6, wobei die Trennwand (165) mindestens eine Öffnung (169) umfasst, die sich durch die Trennwand erstreckt, um die Kühlleitung (116) in Strömungsverbindung mit der Vielzahl von Brennstoffdüsen (38) zu koppeln.

8. Brennstoffdüsenanordnung gemäß Anspruch 6 oder 7, ferner umfassend eine Zwischenwand (162), die zwischen der Kühlleitung (116) und der Gehäuseseitenwand (86) so gekoppelt ist, dass eine zweite Kammer (167) zwischen der Seitenwand (86) und der Zwischenwand (162) definiert wird, wobei die Zwischenwand (162) mindestens eine Öffnung (168) umfasst, die sich durch die Zwischenwand (162) erstreckt, um die Kühlleitung (116) in Strömungsverbindung mit dem Kühlfluidsammelraum (104) durch die Kammer (167) zu koppeln.

9. Brennstoffdüsenanordnung gemäß einem der Ansprüche 3 bis 7, ferner umfassend eine Vielzahl von Öffnungen (170), die sich durch die hintere Stirnwand (90) erstrecken, um den Kühlfluidsammelraum (104) mit der Brennkammer zu koppeln, wobei die Vielzahl von Öffnungen (170) in Umfangsrichtung um das mindestens eine Mischrohr (128) herum ausgerichtet ist.

10. Brennstoffdüsenanordnung gemäß Anspruch 9, wobei das mindestens eine Mischrohr (128) ein Spitzenende (182) umfasst, das sich von der hinteren Stirnwand (90) nach außen in Richtung der Brennkammer erstreckt.

11. Brennstoffdüsenanordnung gemäß Anspruch 10, wobei jede der Vielzahl von Öffnungen (170) in einem ersten schrägen Winkel in Bezug auf die hintere Stirnwand (90) ausgerichtet ist, wobei das Mischrohrspitzenende (182) eine Spitzenfläche (184) umfasst, die in einem zweiten schrägen Winkel ausgerichtet ist, der etwa gleich dem ersten schrägen Winkel ist.

12. Brennstoffdüsenanordnung gemäß einem der Ansprüche 1 bis 11, wobei das mindestens eine Mischrohr (128) eine Außenoberfläche (180) und mindestens einen Schlitz (186) umfasst, der entlang der Außenoberfläche (180) definiert ist, um den Kühlfluidsammelraum (104) in Strömungsverbindung mit der Brennkammer zu koppeln.

13. Brennstoffdüsenanordnung gemäß einem der Ansprüche 1 bis 11, wobei das mindestens eine Mischrohr (128) ein Spitzenende (182), das sich zwischen einer Innenoberfläche (176) und einer Außenoberfläche (180) erstreckt, und mindestens einen Kanal (190) umfasst, der sich von der Außenoberfläche (180) in Richtung des Spitzenendes (182) erstreckt, um Kühlfluid von dem Kühlfluidsammelraum (104) in Richtung der Brennkammer zu leiten.

14. Brennkammeranordnung (30) zur Verwendung mit einem Turbinenmotor (30), wobei die Brennkammeranordnung umfasst:
eine Ummantelung (44), umfassend einen Luftsammelraum;
eine Brennkammerauskleidung (54), die innerhalb der Ummantelung positioniert ist und eine Brennkammer darin definiert; und
eine Brennstoffdüsenanordnung (34) wie in einem der Ansprüche 1 bis 13 angegeben.

15. Verfahren zum Montieren einer Brennstoffdüsenanordnung (34) gemäß einem der Ansprüche 1 bis 13 zur Verwendung mit einem Turbinenmotor (10), wobei das Verfahren umfasst:
Koppeln einer Seitenwand (86) zwischen einer vorderen Stirnwand (88) und einer gegenüberliegenden hinteren Stirnwand (90), um ein Gehäuse (84) mit einer Innenoberfläche (96) zu bilden, die einen Hohlraum (98) darin definiert, wobei die Gehäuseseitenwand (86) mindestens eine Öffnung (161) umfasst, die sich durch die Seitenwandinnenoberfläche (96) erstreckt;
Koppeln einer Innenwand (102) an die Gehäuseinnenoberfläche (96), sodass ein Brennstoffsammelraum (104) zwischen der Innenwand (102) und der vorderen Stirnwand (88) definiert wird, und sodass ein Kühlfluidsammelraum (106) zwischen der Innenwand (102) und der hinteren Stirnwand (90) definiert wird;
Koppeln einer Vielzahl von Mischrohren (128) an das Gehäuse (84), sodass jedes Mischrohr (128) der Vielzahl von Mischrohren sich durch das Gehäuse (84) erstreckt, wobei jedes der Vielzahl von Mischrohren (128) eine Innenoberfläche (134) einschließt, die einen Strömungskanal (136) definiert;
Definieren mindestens eines Kühlfluiddurchgangs (150) durch das mindestens eine Mischrohr (128), um den Kühlfluidsammelraum (106) in Strömungsverbindung mit dem Mischrohr-Strömungskanal (136) zu koppeln; und
Koppeln einer Kühlleitung (116) an die Gehäuseseitenwand (86), sodass die mindestens eine Seitenwandöffnung (161) die Kühlleitung (116) in Strömungsverbindung mit dem Kühlfluidsammelraum (106) koppelt.

16. Verfahren gemäß Anspruch 15, ferner umfassend das Definieren einer Vielzahl von Öffnungen (170) durch die hintere Stirnwand (90), um den Kühlfluidsammelraum (106) in Strömungsverbindung mit der Brennkammer zu koppeln, wobei die Vielzahl von Öffnungen (170) in Umfangsrichtung um das mindestens eine Mischrohr (128) herum ausgerichtet sind.

17. Verfahren gemäß Anspruch 15 oder 16, ferner umfassend das Definieren mindestens eines Schlitzes (186) entlang einer Außenoberfläche (180) des mindestens einen Mischrohrs (128), um den Kühlfluidsammelraum (106) in Strömungsverbindung mit der Brennkammer zu koppeln.

18. Verfahren gemäß einem der Ansprüche 15 bis 17, wobei mindestens ein Mischrohr (128) der Vielzahl von Mischrohren ein Spitzenende (182) einschließt, das sich zwischen der Innenoberfläche (176) und einer Außenoberfläche (180) des mindestens einen Mischrohrs (128) erstreckt, wobei das Verfahren ferner das Definieren mindestens eines Kanals (190) umfasst, der sich von der Außenoberfläche (180) des Mischrohrs in Richtung des Spitzenendes (182) erstreckt, um Kühlfluid von dem Kühlfluidsammelraum (106) in Richtung der Brennkammer zu leiten.

## Revendications

1. Ensemble d'injecteurs de carburant (34) destiné à être utilisé avec un moteur de turbine (10), ledit ensemble d'injecteurs de carburant comprenant :
une pluralité d'injecteurs de carburant (38) positionnés à l'intérieur d'un plénum d'air défini par un boîtier (44), chacun de ladite pluralité d'injecteurs de carburant couplé à une chemise de combustion (54) définissant une chambre de combustion, chacun de ladite pluralité d'injecteurs de carburant comprend :
un logement (84) comprenant une paroi latérale (86) s'étendant entre une paroi d'extrémité avant (88) et une paroi d'extrémité arrière opposée (90), ladite paroi latérale (86) comprenant une surface interne (96) qui définit un plénum de fluide de refroidissement (106) et un plénum de carburant (104), dans lequel un conduit de fluide (108) est couplé en communication fluidique avec ledit plénum de carburant (104), à l'intérieur de celui-ci, ladite paroi latérale (86) comprenant au moins une ouverture (161) s'étendant à travers ladite surface interne (96) de ladite paroi latérale (86) ; et
une pluralité de tubes de mélange (128) s'étendant à travers ledit logement, où chacun desdits tubes de mélange comprend une surface interne (134) définissant un canal d'écoulement (136) s'étendant entre le plénum d'air et la chambre de combustion, au moins un tube de mélange de ladite pluralité de tubes de mélange comprend au moins une ouverture de fluide de refroidissement (150) pour acheminer un écoulement de fluide de refroidissement dudit plénum de fluide de refroidissement audit canal d'écoulement ; et
au moins un conduit de refroidissement (116) couplé à ladite paroi latérale (86) de telle sorte que ladite au moins une ouverture de paroi latérale (161) couple ledit conduit de refroidissement (116) en communication fluidique avec ledit plénum de fluide de refroidissement pour acheminer un écoulement de fluide de refroidissement vers ledit plénum de fluide de refroidissement.

2. Ensemble d'injecteurs de carburant (34) selon la revendication 1, dans lequel ledit au moins un tube de mélange (128) comprend au moins une ouverture de carburant (148) pour acheminer un écoulement de carburant dudit plénum de carburant (104) audit canal d'écoulement (136).

3. Ensemble d'injecteurs de carburant (34) selon la revendication 1 ou 2, dans lequel ledit logement (84) comprend en outre :
une paroi intérieure (102) s'étendant vers l'intérieur depuis ladite surface interne de paroi latérale de telle sorte que ledit plénum de carburant (104) est défini entre ladite paroi intérieure et ladite paroi d'extrémité avant, et de telle sorte que ledit plénum de fluide de refroidissement (106) est défini entre ladite paroi intérieure et ladite paroi d'extrémité arrière.

4. Ensemble d'injecteurs de carburant (34) selon la revendication 3, dans lequel ladite paroi intérieure (102) comprend une ouverture (126) s'étendant à travers ladite paroi intérieure, ledit conduit de refroidissement (116) couplé à ladite paroi intérieure de telle sorte que ladite ouverture de paroi intérieure couple ledit conduit de refroidissement en communication fluidique avec ledit plénum de fluide de refroidissement (106).

5. Ensemble d'injecteurs de carburant (34) selon la revendication 1, comprenant en outre :
une plaque d'extrémité (70) couplée à une surface externe (94) de ladite paroi latérale (86) ; et
une plaque d'impact (159) couplée à ladite surface externe de paroi latérale et espacée vers l'extérieur de ladite plaque d'extrémité de telle sorte qu'une première chambre est définie entre ladite plaque d'extrémité et ladite plaque d'impact, ledit conduit de refroidissement (116) couplé à ladite plaque d'impact pour acheminer un écoulement de fluide de refroidissement vers ladite première chambre et vers ledit plénum de fluide de refroidissement (106).

6. Ensemble d'injecteurs de carburant (34) selon la revendication 5, comprenant en outre une paroi de séparation (165) couplée entre ledit conduit de refroidissement (116) et ladite plaque d'extrémité (70) pour isoler ledit conduit de refroidissement de ladite première chambre.

7. Ensemble d'injecteurs de carburant (34) selon la revendication 6, dans lequel ladite paroi de séparation (165) comprend au moins une ouverture (169) s'étendant à travers ladite paroi de séparation pour coupler ledit conduit de refroidissement (116) en communication fluidique avec ladite pluralité d'injecteurs de carburant (38).

8. Ensemble d'injecteurs de carburant selon la revendication 6 ou 7, comprenant en outre une paroi de division (162) couplée entre ledit conduit de refroidissement (116) et ladite paroi latérale de logement (86) de telle sorte qu'une seconde chambre (167) est définie entre ladite paroi latérale (86) et ladite paroi de division (162), ladite paroi de division (162) comprenant au moins une ouverture (168) s'étendant à travers ladite paroi de division (162) pour coupler ledit conduit de refroidissement (116) en communication fluidique avec ledit plénum de fluide de refroidissement (104) à travers ladite chambre (167).

9. Ensemble d'injecteurs de carburant selon l'une quelconque des revendications 3 à 7, comprenant en outre une pluralité d'ouvertures (170) s'étendant à travers ladite paroi d'extrémité arrière (90) pour coupler ledit plénum de fluide de refroidissement (104) à ladite chambre de combustion, ladite pluralité d'ouvertures (170) orientée circonférentiellement autour dudit au moins un tube de mélange (128).

10. Ensemble d'injecteurs de carburant selon la revendication 9, dans lequel ledit au moins un tube de mélange (128) comprenant une extrémité de pointe (182) qui s'étend vers l'extérieur à partir de ladite paroi d'extrémité arrière (90) vers ladite chambre de combustion.

11. Ensemble d'injecteurs de carburant selon la revendication 10, dans lequel chacune de ladite pluralité d'ouvertures (170) est orientée selon un premier angle oblique par rapport à ladite paroi d'extrémité arrière (90), ladite extrémité de pointe de tube de mélange (182) comprend une surface d'extrémité (184) qui est orientée selon un second angle oblique qui est approximativement égal audit premier angle oblique.

12. Ensemble d'injecteurs de carburant selon l'une quelconque des revendications 1 à 11, dans lequel ledit au moins un tube de mélange (128) comprend une surface externe (180) et au moins une fente (186) définie le long de ladite surface externe (180) pour coupler ledit plénum de fluide de refroidissement (104) en communication fluidique avec ladite chambre de combustion.

13. Ensemble d'injecteurs de carburant selon l'une quelconque des revendications 1 à 11, dans lequel ledit au moins un tube de mélange (128) comprend une extrémité de pointe (182) s'étendant entre une surface interne (176) et une surface externe (180), et au moins un canal (190) s'étendant depuis ladite surface externe (180) vers ladite extrémité de pointe (182) pour acheminer le fluide de refroidissement depuis ledit plénum de fluide de refroidissement (104) vers la chambre de combustion.

14. Ensemble chambre de combustion (30) destiné à être utilisé avec un moteur de turbine (30), ledit ensemble chambre de combustion comprenant :
un boîtier (44) comprenant un plénum d'air ;
une chemise de chambre de combustion (54) positionnée à l'intérieur dudit boîtier et définissant une chambre de combustion à l'intérieur de celui-ci ; et
un ensemble d'injecteurs de carburant (34) tel qu'énoncé dans l'une quelconque des revendications 1 à 13.

15. Procédé d'assemblage d'un ensemble d'injecteurs de carburant (34) selon l'une quelconque des revendications 1 à 13, destiné à être utilisé avec un moteur de turbine (10), ledit procédé comprenant :
le couplage d'une paroi latérale (86) entre une paroi d'extrémité avant (88) et une paroi d'extrémité arrière opposée (90) pour former un logement (84) possédant une surface interne (96) qui définit une cavité (98) à l'intérieur de celui-ci, où la paroi latérale de logement (86) comprend au moins une ouverture (161) s'étendant à travers la surface interne de paroi latérale (96) ;
le couplage d'une paroi intérieure (102) à la surface interne de logement (96) de telle sorte qu'un plénum de carburant (104) est défini entre la paroi intérieure (102) et la paroi d'extrémité avant (88), et de telle sorte qu'un plénum de fluide de refroidissement (106) est défini entre la paroi intérieure (102) et la paroi d'extrémité arrière (90) ;
le couplage d'une pluralité de tubes de mélange (128) au logement (84), de telle sorte que chaque tube de mélange (128) de la pluralité de tubes de mélange s'étend à travers le logement (84), chacun de la pluralité de tubes de mélange (128) incluant une surface interne (134) qui définit un canal d'écoulement (136) ;
la définition d'au moins une ouverture de fluide de refroidissement (150) à travers l'au moins un tube de mélange (128) pour coupler le plénum de fluide de refroidissement (106) en communication fluidique avec le canal d'écoulement de tube de mélange (136) ; et
le couplage d'un conduit de refroidissement (116) à la paroi latérale de logement (86) de telle sorte que l'au moins une ouverture de paroi latérale (161) couple le conduit de refroidissement (116) en communication fluidique avec le plénum de fluide de refroidissement (106).

16. Procédé selon la revendication 15, comprenant en outre la définition d'une pluralité d'ouvertures (170) à travers la paroi d'extrémité arrière (90) pour coupler le plénum de fluide de refroidissement (106) en communication fluidique avec la chambre de combustion, dans lequel la pluralité d'ouvertures (170) sont orientées circonférentiellement autour de l'au moins un tube de mélange (128).

17. Procédé selon la revendication 15 ou 16, comprenant en outre la définition d'au moins une fente (186) le long d'une surface externe (180) de l'au moins un tube de mélange (128) pour coupler le plénum de fluide de refroidissement (106) en communication fluidique avec la chambre de combustion.

18. Procédé selon l'une quelconque des revendications 15 à 17, dans lequel au moins un tube de mélange (128) de la pluralité de tubes de mélange inclut une extrémité de pointe (182) s'étendant entre la surface interne (176) et une surface externe (180) dudit au moins un tube de mélange (128), ledit procédé comprenant en outre la définition d'au moins un canal (190) s'étendant depuis la surface externe de tube de mélange (180) vers l'extrémité de pointe (182) pour acheminer le fluide de refroidissement depuis le plénum de fluide de refroidissement (106) vers la chambre de combustion.
